# EUROPÄISCHE PATENTANMELDUNG

(11) **EP 0 818 340 A2**
(43) Veröffentlichungstag der Anmeldung: **14.01.1998**
(21) Anmeldenummer: 97108448.8
(22) Anmeldetag: 26.05.1997
(51) Int. Cl.: B60K 5/12, B60K 5/04

(54) **Lagerung für eine Brennkraftmaschine**

(30) Priorität: 12.07.1996 DE 19628181
(71) Anmelder: Dr.Ing.h.c. F. Porsche Aktiengesellschaft, 70435 Stuttgart (DE)
(72) Erfinder: Pungartnik, Walter, 71665 Vaihingen (DE); Türi, Julius, 71397 Leutenbach (DE)

(57) **Zusammenfassung**

Eine Lagerung für eine Brennkraftmaschine (2), die eine Einheit mit einem Getriebe (3) bildet, sowie quer in einem Aufbau eines Fahrzeugs eingebaut ist, wird über mindestens ein Lager und mindestens eine Drehmomentstütze am Aufbau gehalten.

## Beschreibung

Die Erfindung bezieht sich auf eine Lagerung für eine Brennkraftmaschine die eine Einheit mit einem Getriebe bildet nach dem Oberbegriff des Anspruchs 1.

Aus der EP 0 297 226 B1 ist eine Lagerung für eine Brennkraftmaschine bekannt, über welche eine Motor-Getriebeeinheit im Fahrzeugaufbau gehalten wird. Die Lagerung für die quer im Fahrzeug eingebaute Einheit besteht aus zwei mit der Stirnwand des Aufbaus verbundene und in der Höhe versetzt zueinander angeordnete Drehmomentstützen. Weitere elastische Lager sind am Motor bzw. am Getriebegehäuse vorgesehen. Diese Lager sind zu beiden Seiten einer Schwerpunktebene angeordnet.

Die Aufgabe der Erfindung besteht darin, eine verbesserte Lagerung für eine Antriebseinheit in einem Kraftfahrzeug zu schaffen, die neben einem einfachen Aufbau eine raumsparende Anordnung der Lager aufweist. Desweiteren soll eine gezielte Abstützung bei Gaswechselkräften gewährleistet sein.

Diese Aufgabe wird erfindungsgemäß durch die Merkmale des Anspruchs 1 gelöst. Weitere vorteilhafte Merkmale beinhalten die Unteransprüche.

Die mit der Erfindung hauptsächlich erzielten Vorteile bestehen darin, daß zur Lagerung der Antriebseinheit nur drei Lager erforderlich sind, wobei eine Drehmomentstütze sowie ein Anschlaglager an der Stirnseite des Motorgehäuses vorgesehen werden. Ein weiteres Lager ist am Getriebegehäuse befestigt. Die Lager sind in der Weise örtlich zur Antriebseinheit angeordnet, daß eine gezielte Bewegung der Antriebseinheit, insbesondere bei Gaswechselkräften und bei einem Leerlaufschütteln erreicht wird und die Lager zudem in schwingungsarmen Bereichen angeordnet werden können. Bei dem Leerlaufschütteln wird sich das Antriebsaggregat um eine durch die beiden oberen Lager verlaufende Schwenkachse verschwenken. Bei Gaswechselreaktionen wird sich eine zwischen den drei Lagern einstellende ideelle Schwenkachse ergeben.

Das Anschlaglager ist mit dem am Getriebegehäuse befestigten Lager etwa in einer horizontalen Ebene vorgesehen, durch die sich eine Schwenkachse des Antriebsaggregats ausbildet, welche zu dieser Ebene geringfügig schräg verläuft.

Das Anschlaglager weist ein elastisches Lagerelement mit in Fahrzeuglängsrichtung ausgebildeten Anschlägen auf, die elastisch ausgeführt sein können. Hierdurch soll eine elastische Begrenzung der Schwenkbewegung um die Schwenkachse erfolgen. Insbesondere ist ein Anschlag bogenförmig und der gegenüberstehende Anschlag plan ausgeführt, wodurch eine optimale Anschlagfunktion bei einer Schwenkbewegung des Antriebsaggregats möglich wird.

Die elastischen Lager zur Bildung der Schwenkachse sind vorzugsweise mit einer horizontalen Achse ausgebildet, wogegen das Anschlaglager eine vertikale Achse aufweist. Das Lager am Getriebegehäuse ist oberseitig des Gehäuses angeordnet, so daß das Antriebsaggregat an diesem Lager quasi hängt. Die beiden anderen Lager sind in der Weise angeordnet, daß das Antriebsaggregat auf diesen Lagern steht.

Ein Ausführungsbeispiel der Erfindung ist in der Zeichnung dargestellt und wird im folgenden näher beschrieben.

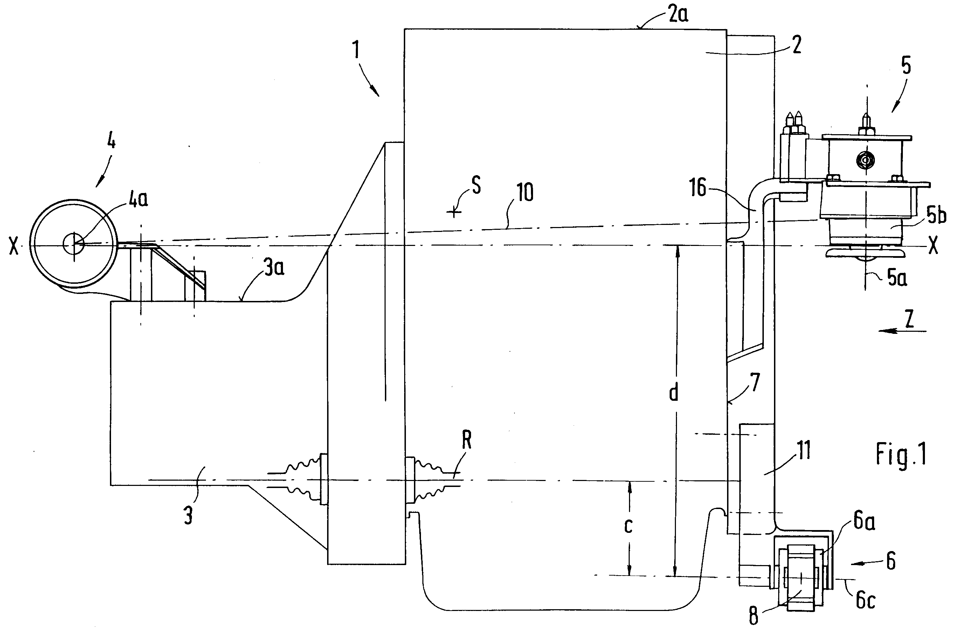

Es zeigen
- Fig. 1: eine Vorderansicht der Antriebseinheit mit drei Lagerungen,
- Fig. 2: eine Draufsicht auf die Antriebseinheit mit den drei Lagerungen,

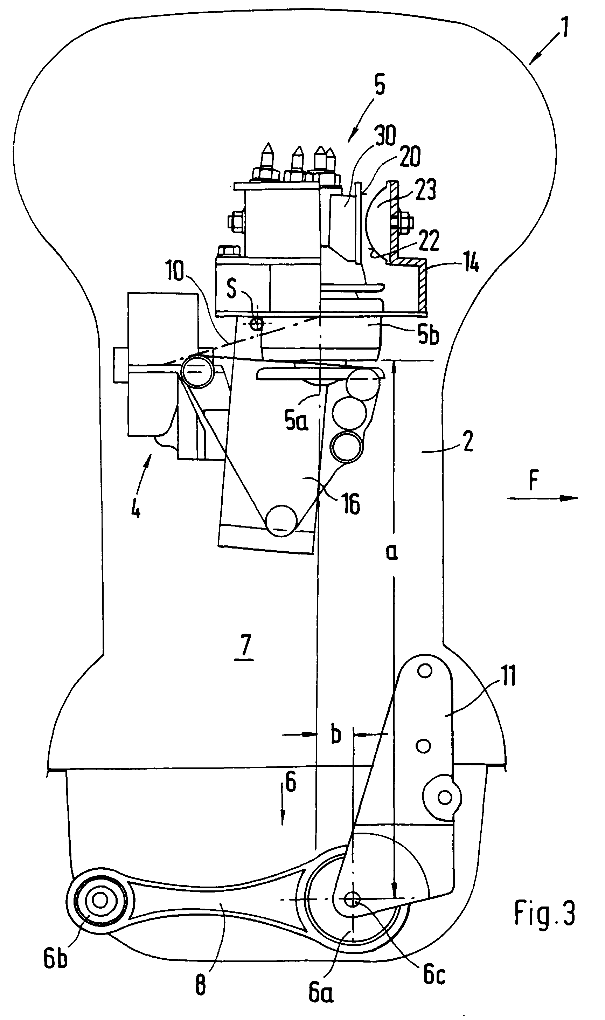

- Fig. 3: eine Ansicht auf die Stirnseite der Antriebseinheit in Pfeilrichtung Z der Fig. 1 gesehen und

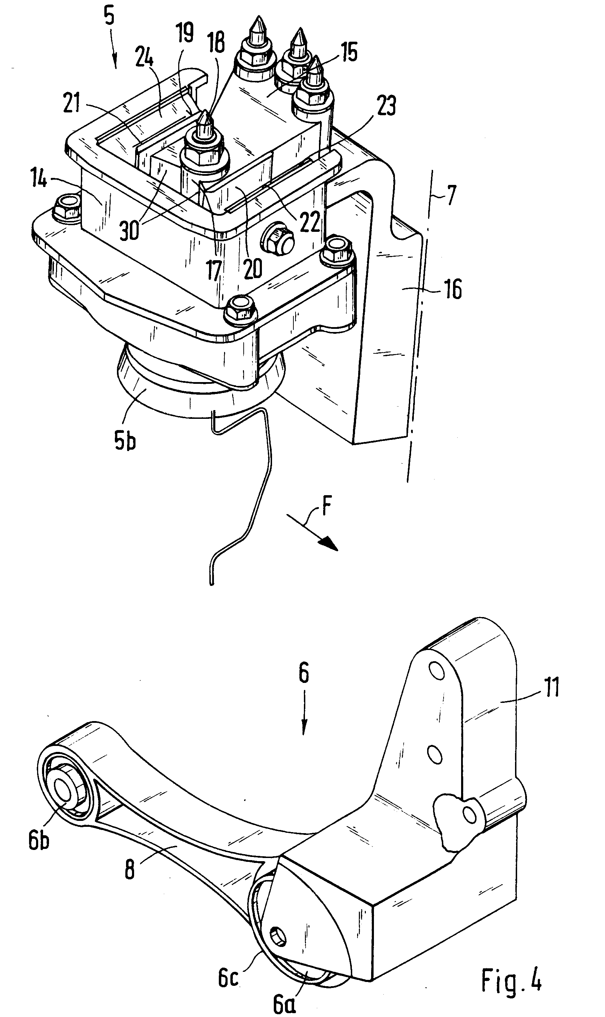

- Fig. 4: eine schaubildliche Darstellung des Anschlaglagers sowie einem darunter angeordneten elastischen Lager mit Drehmomentstütze.

Die Lagerung für eine quer im Fahrzeug eingebaute Antriebseinheit 1 eines Kraftfahrzeuges, welches aus einer Brennkraftmaschine 2 mit verbundenem Getriebe 3 besteht, ist über drei Lager 4, 5 und 6 am Fahrzeugaufbau elastisch abgestützt. An der Stirnseite 7 des Motorgehäuses 2a sind ein als Anschlaglager ausgebildetes erstes Lager 5 und eine Drehmomentstütze 8 mit dem zweiten Lager 6 übereinander mit einem vertikalen Abstand a angeordnet. Das Lager 4 am Getriebegehäuse 3a ist oberseitig des Gehäuses 3a angeordnet, so daß die Einheit an diesem Lager 4 hängt.

Das Anschlaglager 5 und das Lager 4 sind in eine annähernd horizontal verlaufenden Ebene X-X angeordnet, wobei die Lager 4 und 5 eine Schwenkachse 10 für das Antriebsaggregat im Betrieb bilden. Unterhalb des Anschlaglagers 5 ist das elastische Lagerelement 6a der Drehmomentstütze 8 über eine Konsole 11 mit dem Motorgehäuse 2a verbunden. Auf diesem Lagerelement 6a ist die Drehmomentstütze 8 gehalten, die sich über ein weiteres elastisches Lagerelement 6b am abgekehrten freien Ende am Fahrzeugaufbau abstützt. Die Drehmomentstütze 8 erstreckt sich etwa entgegen der Fahrtrichtung F in Fahrzeuglängsrichtung und ist zumindest in einer horizontalen Ebene gehalten.

Das Lager 4 sowie das Lagerelement 6a der Drehmomentstütze 8 weisen horizontal verlaufende Lagerachsen 4a und 6c auf, wobei die Achse 4a in Fahrzeuglängsrichtung und die Achse 6c in Fahrzeugquerrichtung verlaufen. Das Anschlaglager 5 weist dagegen eine vertikal verlaufende Achse 5a auf. Die Lagerachse 6c des Lagers 6 ist unterhalb von Radantriebswellen R vorgesehen, wobei der Abstand c kleiner ist als der Abstand d der Lagerachse 6c von der Ebene X-X des Lagers 5.

Das Lager 4 am Getriebegehäuse 3a ist oberseitig des Gehäuses angeordnet, so daß das Getriebe 3 quasi hängt. Das Motorlager 5 liegt stirnseitig stehend auf Höhe etwa des Zylinderkopfes. Die Schwenkachse 4a und 5a beider Lager 4, 5 liegen über dem Schwerpunkt S. Das weitere Lager 6 dient als Drehmomentstütze und stützt sich gegen die beiden Motor- und Getriebelager ab.

Das Anschlaglager 5 umfaßt ein elastisches Lagerelement 5b, das am Fahrzeugaufbau über ein U-förmiges, das Lager 5 umgebendes Konsolelement 14 einerseits mit dem Fahrzeugaufbau und andererseits über ein Halteelement 15 und einem Winkel 16 mit dem Fahrzeugaufbau verbunden ist.

Das Halteelement 15 weist im Zentrum eine Aufnahme 17 für eine Schraube 18 des Lagers 5 auf. Beabstandet zu dieser Aufnahme 17 sind parallele Anschlagflächen 19 und 20 vorgesehen, die korrespondierend zu Anschlagflächen 21, 22 des Halteelements 15 vorgesehen sind. Die Anschlagflächen 21, 22 sind bogenförmig ausgeführt und aus elastischen Elementen 23, 24 bestehend. Die gegenüberstehenden Anschlagflächen 19 und 20 sind dagegen plan ausgerichtet und bestehen jeweils aus einer Platte. Diese Anschlagflächen 19, 20 können hinter der Platte ebenfalls ein elastisches Element aufweisen.

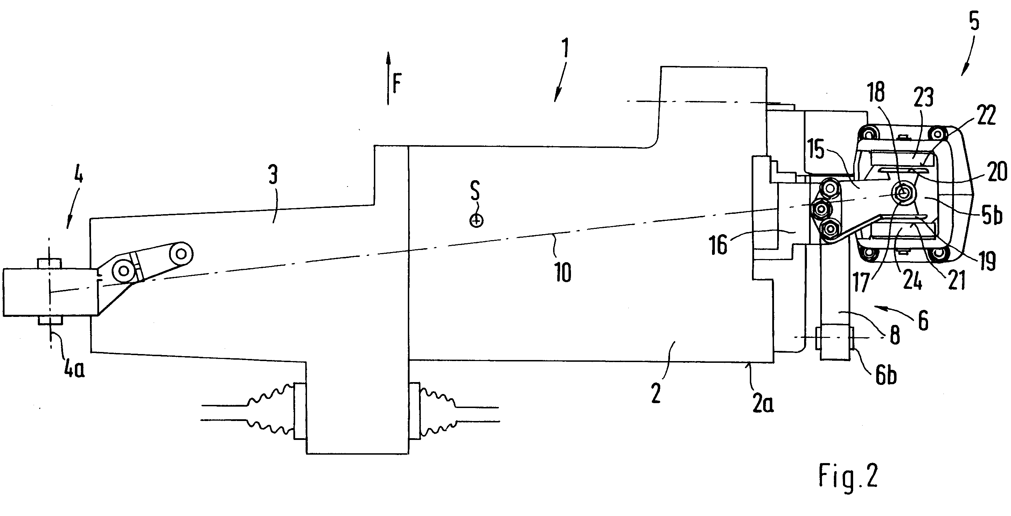

Wie in Fig. 2 näher dargestellt ist, wird die Antriebseinheit 1 somit bei möglichen Schwenkbewegungen um die Achse 10 in ihren Bewegungen begrenzt, indem die Anschläge 19 oder 20 an den gegenüberstehenden elastischen Elementen 24 oder 23 anschlagen und ein Verschwenken der Antriebseinheit 1 optimal begrenzen.

## Patentansprüche

1. Lagerung für eine Brennkraftmaschine, die eine Einheit mit einem Getriebe bildet, sowie quer in einem Aufbau eines Fahrzeugs eingebaut und über mindestens ein Lager und mindestens eine Drehmomentstütze am Aufbau gehalten ist, dadurch gekennzeichnet, daß am Getriebegehäuse (3a) ein erstes elastisches Lager (4) und an einer Stirnseite (7) des Motorgehäuses (2a) mindestens zwei weitere Lager (5, 6) angeordnet sind, wobei das eine Lager (5) als elastisches Anschlaglager ausgeführt ist und das weitere Lager (6) eine sich entgegen der Fahrtrichtung (F) erstreckende Drehmomentstütze (8) umfaßt und das Anschlaglager (5) mit dem Lager (4) am Getriebegehäuse (3a) etwa in einer horizontalen Ebene (X-X) angeordnet sind.

2. Lagerung nach Anspruch 1, dadurch gekennzeichnet, daß das Lager (4) des Getriebegehäuses (3a) eine in Fahrzeuglängsrichtung ausgerichtete Lagerachse (4a) und das Anschlaglager (5) eine vertikal verlaufende Lagerachse (5a) und das Lagerelement (6a) des Lagers (6) der Drehmomentstütze (8) eine quer zum Fahrzeug verlaufende Lagerachse (6c) aufweist.

3. Lagerung nach den Ansprüchen 1 oder 2, dadurch gekennzeichnet, daß das Anschlaglager (5) an der Stirnseite (7) des Motorgehäuses (2a) oberhalb der Drehmomentstütze (8) in einem vertikalen Abstand (a) angeordnet ist und ein in einer aufbauseitig gehaltenen Konsole (11) angeordnetes elastisches Lagerelement (6a) der Drehmomentstütze (8) in einem horizontalen Abstand (b) zum Lagerelement (5b) des Anschlaglagers (5) angeordnet ist.

4. Lagerung nach einem oder mehreren der vorhergehenden Ansprüche, dadurch gekennzeichnet, daß das Anschlaglager (5) ein stehendes elastisches Lagerelement (5b) aufweist, das einerseits mit einem Längsträger des Fahrzeugaufbaus und andererseits mit einem am Motorgehäuse befestigten Halteelement (15) verbunden ist, das in Fahrzeuglängsrichtung wirkende Anschlagflächen (19, 20) aufweist, die korrespondierend zu Anschlagflächen (21, 22) mit feststehenden Elastomerpolstern (23, 24) in einem Konsolelement (14) angeordnet sind.

5. Lagerung nach einem oder mehreren der vorhergehenden Ansprüche, dadurch gekennzeichnet, daß das Halteelement (15) über einen Winkel (16) direkt mit der Stirnseite (7) des Motorgehäuses (2a) verbunden ist.

6. Lagerung nach den Ansprüchen 1 oder 5, dadurch gekennzeichnet, daß die Elastomerpolster (21, 22) an Innenflächen des U-förmig ausgebildeten Konsolelements (14) befestigt sind und einen bogenförmigen Oberflächenverlauf aufweisen, wogegen die gegenüberstehenden Anschlagflächen (19, 20) plan ausgebildet sind.

7. Lagerung nach den Ansprüchen 1, 4, 5 oder 6, dadurch gekennzeichnet, daß die Anschlagflächen (19, 20) parallel zueinander, zu beiden Seiten einer Aufnahme (17) für eine Schraube des Lagers (5) im Halteelement (15) angeordnet sind.

8. Lagerung nach den Ansprüchen 1, 4, 5, 6 oder 7, dadurch gekennzeichnet, daß zwischen den Anschlagflächen (19, 20) und dem Halteelement (15) jeweils eine Elastomerschicht (30) bzw. ein Elastomerpolster vorgesehen ist.

9. Lagerung nach einem oder mehreren der vorhergehenden Ansprüche, dadurch gekennzeichnet, daß das Lager (6) eine Lagerachse (6c) aufweist, die unterhalb von Radantriebswellen (R) angeordnet ist.
